# EUROPÄISCHE PATENTSCHRIFT

(11) **EP 0 792 917 B1**
(45) Veröffentlichungstag und Bekanntmachung des Hinweises auf die Patenterteilung: **27.08.2003**
(21) Anmeldenummer: 97102555.6
(22) Anmeldetag: 18.02.1997
(51) Int. Cl.: C08L 75/04, C08K 5/20, C08K 5/101

(54) **Wachs enthaltende thermoplastisch verarbeitbare Polyurethane**
Thermoplastically processable polyurethanes containing wax
Polyuréthanes thermoplastiques contenant de la cire

(30) Priorität: 01.03.1996 DE 19607870
(43) Veröffentlichungstag der Anmeldung: 03.09.1997
(73) Patentinhaber: BAYER AG, 51368 Leverkusen (DE)
(72) Erfinder: Bräuer, Wolfgang, Dr., 51375 Leverkusen (DE); Müller, Friedemann, Dr., 41470 Neuss (DE); Winkler, Jürgen, Dipl. Ing., 40764 Langenfeld (DE); Hoppe, Hans-Georg, Dipl. Ing., 42799 Leichlingen (DE); Schulte, Bernhard, Dr., 47803 Krefeld (DE); Wolf, Karl-Heinz, Dr., 51061 Köln (DE); Wussow, Hans-Georg, Dr., 40597 Düsseldorf (DE)

(56) Entgegenhaltungen:
- EP-A- 0 153 639
- EP-A- 0 563 918
- DATABASE WPI Section Ch, Week 9049 Derwent Publications Ltd., London, GB; Class A25, AN 90-366517 XP002032280 & JP 02 265 964 A (DYNIC CORP) , 30.Oktober 1990

## Beschreibung

Die Erfindung betrifft Carbonsäureamidester-Wachs enthaltende thermoplastisch verarbeitbare Polyurethane, die daraus hergestellten Filme, Folien, Fasern und Spritzgießteile sowie ein Verfahren zur kontinuierlichen Herstellung dieser thermoplastisch verarbeitbaren Polyurethane.

Thermoplastische Polyurethan-Elastomere (TPU) sind von technischer Bedeutung, da sie ausgezeichnete mechanische Eigenschaften zeigen und sich kostengünstig thermoplastisch verarbeiten lassen. Durch die Verwendung unterschiedlicher chemischer Aufbaukomponenten lassen sich ihre mechanischen Eigenschaften über einen großen Bereich variieren. Zusammenfassende Darstellungen von TPU, ihren Eigenschaften und Anwendungen finden sich in Kunststoffe 68 (1978), S. 819-825 und Kautschuk, Gummi, Kunststoffe 35 (1982), S. 568-584.

TPU werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Die molaren Verhältnisse der Aufbaukomponenten können über einen breiten Bereich variiert werden, woduch sich die Eigenschaften des Produkts einstellen lassen. Bewährt haben sich molare Verhältnisse von Polyolen zu Kettenverlängerern von 1:1 bis 1:12. Hierdurch ergeben sich Produkte im Bereich von 70 Shore A bis 75 Shore D. Der Aufbau der thermoplastisch verarbeitbaren Polyurethanelastomeren kann entweder schrittweise (Prepolymerverfahren) oder durch die gleichzeitige Reaktion aller Komponenten in einer Stufe erfolgen (one-shot-Verfahren). Beim Prepolymerverfahren wird aus dem Polyol und dem Diisocyanat ein isocyanathaltiges Prepolymer gebildet, das in einem zweiten Schritt mit dem Kettenverlängerer umgesetzt wird. Die TPU können kontinuierlich oder diskontinuierlich hergestellt werden. Die bekanntesten technischen Herstellverfahren sind das Bandverfahren und das Extruderverfahren.

Neben Katalysatoren können den TPU-Komponenten auch Hilfsmittel und Zusatzstoffe zugesetzt werden. Als Beispiel seien Wachse genannt, die sowohl bei der technischen Herstellung der TPU als auch ihrer Verarbeitung wichtige Aufgaben übernehmen. Das Wachs dient als friktionsminderndes inneres und äußeres Gleitmittel und verbessert so die Fließeigenschaften des TPU. Zusätzlich soll es als Trennmittel das Ankleben des TPU an das umgebende Material (z.B. das Werkzeug) verhindern, und als Dispergator für andere Zusatzstoffe, z.B. Pigmente und Antiblockmittel, wirken.

Dem Stand der Technik entsprechende Wachse sind z.B. Fettsäureester, wie Stearinsäureester und Montansäureester, sowie deren Metallseifen, daneben Fettsäureamide, wie Stearylamide und Ölsäureamide, oder auch Polyethylenwachse. Eine Übersicht der in Thermoplasten eingesetzten Wachse findet sich in R. Gächter, H. Müller (Ed.): Taschenbuch der Kunststoff-Additive, 3. Ausgabe, Hanser Verlag, München 1989, S. 443ff.

In EP-A 563918 werden Polyurethan-Formmassen beschrieben, die Trennmittel zur Verminderung des Klebens der Formmassen an Maschinenteilen von Verarbeitungsmaschinen und Formwerkzeugen enthalten. Diese Trennmittel sind Umsetzungsprodukte von langkettigen Carbonsäuren, vorzugsweise Montansäure mit Aminoalkoholen.

In EP-A 153 639 wird ein Verfahren zur Herstellung von zelligen oder kompakten Polyurethan-Polyharnstoff-Formkörpem mit verbesserten Entformungseigenschaften sowie innere Formtrennmittel beschrieben. Als Formtrennmittel werden Carbonsäureester und/oder Carbonsäureamide eingesetzt, die durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen hergestellt werden.

Im Derwent-Abstract zu JP 02 265 964 werden Urethanharzkompositionen beschrieben, die ein thermoplastisches Urethanelastomer, ein Kondensat aus Montansäure und einem aliphatischen Polyol und gegebenenfalls Ethylen-bis-stearylsäureamid und/oder Methylen-bis-stearylsäureamid enthalten.

Aufgrund der chemischen Reaktionsfähigkeit und der speziellen Verarbeitungs- und Gebrauchstemperaturen von TPU eignen sich viele der oben genannten Wachse nicht für den Einsatz in TPU. Es wurden daher bisher im wesentlichen Amidwachse verwendet, die eine gute Trennwirkung aufweisen, insbesondere Ethylen-bis-stearylamid. Daneben werden Montanesterwachse eingesetzt, die gute Gleitmittel-Eigenschaften bei geringer Flüchtigkeit zeigen (EP-A 308 683; EP-A 670 339; JP-A 5 163 431). Ein Nachteil von Amidwachsen beim Einsatz in TPU ist aber deren Neigung zur Migration. Diese führt nach einiger Zeit zu Belagbildung auf dem Werkstück, was sowohl zu einer optischen Beeinträchtigung führt, insbesondere bei dünnwandigen Anwendungen wie Folien, als auch unerwünschte Veränderungen oberflächenabhängiger Eigenschaften zur Folge hat. Die Verwendung von Montanesterwachsen ist durch zu niedrige Trübungsgrenzen eingeschränkt. Außerdem zeigen sie selbst bei höherer Konzentration keine ausreichende Trennwirkung.

Es wurde nun gefunden, dass sich die Nachteile der bekannten Wachse vermeiden lassen durch Verwendung von Wachsen, die durch Acylierung der Hydroxy- und Aminogruppen von Aminoalkoholen erhältlich sind.

Gegenstand der Erfindung sind somit thermoplastisch verarbeitbare Polyurethane, hergestellt durch Umsetzung der polyurethanbildenden Komponenten
A) organisches Diisocyanat,
B) lineares hydroxylterminiertes Polyol mit einem Molekulargewicht von 500 bis 5000,
C) Diol- oder Diamin-Kettenverlängerer mit einem Molekulargewicht von 60 bis 500,
wobei das Molverhältnis der NCO-Gruppen in A) zu den gegenüber Isocyanat reaktiven Gruppen in B) u. C) 0,9 bis 1,2 beträgt,
dadurch gekennzeichnet, daß das Polyurethan 0,05 bis 2 Gew.-%, bezogen auf das Gesamtprodukt, eines durch Acylierung der Hydroxy- und Aminogruppen von Aminoalkoholen mit Ölsäure, Palmitinsäure, Stearylsäure, Erucasäure oder deren Derivaten erhältlichen Wachses enthält.

Als organische Diisocyanate A) kommen beispielsweise aliphatische, cycloaliphatische, araliphatische, heterocyclische und aromatische Diisocyanate in Betracht, wie sie in Justus Liebigs Annalen der Chemie, 562, S.75-136 beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat Polyphenyl-polymethylen-polyisocyanaten.

Als Komponente B) werden lineare hydroxylterminierte Polyole mit einem Molekulargewicht von 500 bis 5000 eingesetzt. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyldiethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, daß ein thermoplastisch verarbeitbares Produkt entsteht. Die im wesentlichen linearen Polyether-Diole besitzen Molekulargewichte von 500 bis 5000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Poly-caprolactone. Die Polyester-Diole besitzen Molekulargewichte von 500 bis 5000 und können einzeln oder in Form von Mischungen untereinander zur Anwendung kommen.

Als Kettenverlängerungsmittel C) werden Diole oder Diamine mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoff-atomen, wie z.B. Terephthalsäure-bis-ethylenglykol oder Terephthalsäure-bis-1,4-butandiol, Hydroxyalkylenether des Hydrochinons, wie z.B. 1,4-Di(-hydroxyethyl)-hydrochinon, ethoxylierte Bisphenole, (cyclo)aliphatische Diamine, wie z.B. Isophorondiamin, Ethylendiamin, 1,2-Propylen-diamin, 1,3-Propylen-diamin, N-Methyl-propylen-1,3-diamin, N,N'-Dimethyl-ethylendiamin und aromatische Diamine, wie z.B. 2,4-Toluylen-diamin und 2,6-Toluylen-diamin, 3,5-Diethyl-2,4-toluylen-diamin und 3,5-Diethyl-2,6-toluylen-diamin und primäre mono-, di-, tri-oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und Zusatzstoffen, in solchen Mengen zur Reaktion gebracht werden, daß das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,2:1,0, vorzugsweise 0,95:1,0 bis 1,10:1,0 beträgt.

Erfindungsgemäß enthalten die TPU 0,05 bis 2 Gew.-% , bevorzugt 0,1 bis 1,2 Gew.-% , bezogen auf das Gesamt-TPU, an Wachsen, die durch Acylierung der Hydroxy- und Aminogruppen von Aminoalkoholen erhältlich sind. Kennzeichnend für diese Wachse ist, daß sie 1 bis 4 Carbonsäureamid- und 1 bis 4 Carbonsäureestergruppen pro Molekül aufweisen. Sie lassen sich in einfacher Weise durch Umsetzung der Hydroxy- und Aminogruppen von Aminoalkoholen mit Carbonsäuren oder reaktiven Carbonsäurederivaten, z.B. Säurechloriden, herstellen. Erfindungsgemäße Wachse sind aber auch alle Verbindungen, die dieselbe Struktur wie diese Umsetzungsprodukte aufweisen, aber auf anderem Wege erhalten wurden.

Als Aminoalkohole können erfindungsgemäß aliphatische Aminoalkohole mit 2 bis 10 C-Atomen eingesetzt werden, z.B. Ethanolamin, 2-Aminopropanol, 4-Aminobutanol, 8-Aminooctanol und aromatische Aminoalkohole wie z.B. Aminophenol. Weiterhin können auch die durch Aminolyse von Epoxiden erhältlichen Aminoalkohole, z.B. epoxidierte Fettsäureester oder Bisphenol A- glycidylester Verwendung finden. Es können aber auch Verbindungen mit mehreren Hydroxyl-und Aminofunktionen verwendet werden, z.B. 1,3-Diamino-2-propanol, 2-Amino-1,3,-propandiol, 2,2-Diaminomethyl-1,3-Propandiol .

Zur Herstellung der erfindungsgemäßen Wachse können Ölsäure, Palmitinsäure, Stearylsäure oder Erucasäure verwendet werden. Die Carbonsäuren können einzeln oder im Gemisch eingesetzt werden. Es kann zweckmäßig sein, zur Herstellung der erfindungsgemäßen Wachse reaktive Carbonsäurederivate, z B Säurechloride, zu verwenden.

Beispiele für erfindungsgemäße Wachse sind. Ölsäureamidethyloleat, Ölsäureamidbutyloleat, Palmitinsäureamidethylpalmitat, Palmitinsäureamidbutylpalmitat, Stearylsäureamidethylstearat, Stearylsäureamidbutylstearat, Erucasäureamidethylerucat, Ölsäuremidethylstearat, Palmitinsäureamidethylstearat, Stearylsäureamidethyloleat. Bevorzugt sind Wachse, die einen Schmelzbereich von 70 bis 100°C aufweisen, z.B. Stearylsäureamidethylstearat. Die erfindungsgemäßen Wachse können einzeln oder in Mischungen untereinander zur Anwendung kommen.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen.

Neben den TPU-Komponenten, den erfindungsgemäßen Wachsen und den Katalysatoren können auch andere Hilfsmittel und Zusatzstoffe zugesetzt werden. Genannt seien beispielsweise nicht erfindungsgemäße Gleitmittel wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe und Verstärkungsmittel. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Weitere Zusätze, die in das TPU eingearbeitet werden können, sind Thermoplaste, beispielsweise Polycarbonate und Acrylnitril-Butadien-Styrol-Terpolymerisate, insbesondere ABS. Ebenfalls können andere Elastomere wie Kautschuk, Ethylen-Vinylacetatcopolymerisate, Styrol-Butadiencopolymerisate sowie andere TPU verwendet werden. Weiterhin zur Einarbeitung geeignet sind handelsübliche Weichmacher wie Phosphate, Phthalate, Adipate, Sebacate und Alkylsulfonsäureester.

Gegenstand der Erfindung sind auch Verfahren zur Herstellung der erfindungsgemäßen TPU. Diese können kontinuierlich im sogenannten Extruderverfahren, z.B. in einem Mehrwellenextruder, hergestellt werden. Die Dosierung der TPU-Komponenten A), B) und C) kann gleichzeitig, d.h. im one-shot-Verfahren, oder nacheinander, d.h. nach einem Prepolymer-Verfahren, erfolgen. Dabei kann das Prepolymer sowohl batchweise vorgelegt, als auch kontinuierlich in einem Teil des Extruders oder in einem separaten vorgeschalteten Prepolymeraggregat hergestellt werden.

Die erfindungsgemäßen Wachse können kontinuierlich zu der TPU-Reaktion in den Extruder, bevorzugt in das erste Extrudergehäuse, dosiert werden. Die Dosierung erfolgt entweder bei Raumtemperatur im festen Aggregatzustand oder in flüssiger Form bei 70 bis 120°C. Es ist aber auch möglich, die erfindungsgemäßen Wachse in das vorher hergestellte und in einem Extruder wieder aufgeschmolzene TPU zu dosieren und zu compoundieren. Sie können aber auch in einer weiteren Variante vor der Reaktion in die Polyol-Vorlage, bevorzugt bei Temperaturen von 70 bis 120°C, homogen eingemischt und mit ihr zusammen in die Reaktion dosiert werden.

Die so erhaltenen TPU-Produkte besitzen gute mechanische und elastische Eigenschaften. Zusätzlich haben sie ein hervorragendes Verarbeitungsverhalten. Aus ihrer Schmelze lassen sich Filme, Folien und Fasern mit großer Homogenität herstellen. Diese Filme und Folien, die bevorzugt eine Härte von 65 bis 95 Shore A zeigen, haben aufgrund ihrer geringen Klebeneigung ein sehr gutes Trennverhalten. Da keine Migration auftritt, werden das optische Bild und die Oberflächeneigenschaften auch bei langer Lagerzeit nicht beeinträchtigt.

Auch bei der Verarbeitung zu Spritzgießartikeln macht sich das hervorragende Trennverhalten der erfindungsgemäßen TPU-Produkte in einer guten Entformbarkeit bemerkbar. Die geringe Migrationsneigung führt wie bei den Filmen und Folien auch nach langer Lagerzeit zu keinerlei Belagbildung.

### Beispiele

### Beispiele 1 bis 9

### TPU-Rezeptur

| | |
|---|---|
| Poly-butandiol-1,4-adipat (Molekulargewicht ca. 2200): | 100 Gew.-Teile |
| Butandiol : | 11 Gew.-Teile |
| Diphenylmethandiisocyanat (MDI-flüssig, 50°C): | 42 Gew.-Teile |
| Zinndioctoat: | 150 ppm |

### TPU-Herstellverfahren

Kontinuierliche TPU-Reaktion im gemischten Rohrmischer/Extruder (Extruder ZSK 83, Fa. Werner/Pfleiderer) nach dem bekannten Prepolymerfahren (EP-A 571 830, EP-A 571 828). Die Gehäusetemperaturen der 13 Gehäuse liegen bei 100°C bis 220°C. Die Drehzahl der Schnecke ist auf 300 U/min eingestellt. Die Gesamtdosierung liegt bei 500 kg/h. Das TPU wird als Schmelzestrang extrudiert, in Wasser abgekühlt und granuliert.

### Wachsdosierung

Das Wachs bzw. die Wachsmischung wird nach Maßgabe der Tabellen 1 u. 2 kontinuierlich zudosiert
a) in die oben geschilderte kontinuierliche TPU-Reaktion (ZSK-Gehäuse 1)
   oder
b) in die Reextrusion des fertigen TPU-Granulates (Herstellverfahren siehe oben) im Extruder (ZSK 83; Wachs in Gehäuse 1; Gehäusetemperaturen 200°C bis 220°C; Schneckendrehzahl 100 U/min; das TPU wird als Schmelzestrang extrudiert, in Wasser abgekühlt und granuliert).

### Blasfolienherstellung

Das TPU-Granulat wird in einem Einwellen-Extruder (Einwellen-Extruder 30/25D Plasticorder PL 2000-6, Fa.Brabender) aufgeschmolzen (Dosierung 3 kg/h; 185-205°C) und durch einen Folienblaskopf zu einer Schlauchfolie extrudiert.

### Herstellung der Spritzgießplatten

Das TPU-Granulat wird in einer Spritzgießmaschine (Spritzgießmaschine D 60, 32er Schnecke, Mannesmann AG) aufgeschmolzen (Massetemperatur ca. 225°C) und zu Platten geformt (Formtemperatur 40°C ; Plattengröße : 125x45x2 mm).

Die wichtigsten Eigenschaften der so hergestellten TPU-Formkörper sind in den Tabellen 1 und 2 angegeben.

**Tabelle 1:**

| **Folienbeurteilung** Beispiele 1-3 = nicht erfindungsgemäße Vergleichsbeispiele | | | | | | |
|---|---|---|---|---|---|---|
| Beispiel | Wachs | Gew.-% | Wachsdosierung | Folien-Homogenität | Folien-Klebeverhalten | Folien-Belagbildung Lagerzeit 3 Monate |
| 1 | 1 | 0.14 | Reaktion | befriedigend | klebt | stark |
| 2 | 2 | 0.14 | Reaktion | schlecht | klebt | etwas |
| 3 | 1 | 0.14 | Reaktion | befriedigend | klebt | stark |
| | 2 | 0.14 | Reextrusion | | | |
| 4 | 1 | 0.14 | Reaktion | gut | klebt nicht | nein |
| | 3 | 0.2 | Reextrusion | | | |
| 5 | 3 | 0.7 | Reaktion | gut | klebt nicht | nein |
| 6 | 3 | 0.2 | Reextrusion | gut | klebt nicht | nein |
| | 2 | 0.2 | Reaktion | | | |
| | 4 | 0.2 | Reaktion | | | |

In den Beispielen 3, 4 und 6 wurde eine Wachskomponente erst bei der Extrusion des unter Verwendung der übrigen Wachskomponente(n) hergestellten Materials zugesetzt.

**Tabelle 2:**

| **Ausschwitztest von Spritzgießplatten / Lagerung bei 80°C** Beispiele 7 u. 9 = nicht erfindungsgemäße Vergleichsbeispiele | | | | | | |
|---|---|---|---|---|---|---|
| Beispiel | Wachs | Gew.-% | Wachsdosierung | Belagbildung : sofort | nach 1 Woche | nach 2 Wochen |
| 7 | 1 | 0.4 | Reaktion | stark | stark | stark |
| 9 | 1 | 0.4 | Reaktion | leicht | mittel | mittel |
| | 2 | 0.3 | Reaktion | | | |
| | 4 | 0.1 | Reaktion | | | |
| 8 | 2 | 0.45 | Reaktion | nein | nein | nein |
| | 3 | 0.25 | Reaktion | | | |
| | 4 | 0.15 | Reaktion | | | |
| 5 | 3 | 0.7 | Reaktion | nein | nein | sehr leicht |
| Wachs 1 = Höchstwachs C (Ethylen-bis-stearylamid) | | | | | | |
| Wachs 2 = Höchstwachs E (Ethylmontanat) | | | | | | |
| Wachs 3 = Abril Paradigm Wax 77 (Stearylsäureamidethylstearat) | | | | | | |
| Wachs 4 = Höchstwachs OP (Butylmontanat , teilweise mit Ca verseift) | | | | | | |

Tabelle 1 zeigt, daß die Folien, die das erfindungsgemäße Wachs Stearylsäureamidethylstearat enthalten, bei einer verbesserten Homogenität keine Klebeneigung aufweisen, was zu einer guten Trennbarkeit der Schlauch-Folien führt. Zusätzlich zeigt das Wachs auch nach langer Zeit keine erkennbare Migrationstendenz. Tabelle 2 zeigt, daß nur die Spritzgießplatten mit dem erfindungsgemäßen Wachs Stearylsäureamidethylstearat bei einer getemperten Lagerung keine Belagbildung aufweisen.

Die beschriebenen Effekte sind nicht durch eine Mischung von Wachsen zu erzielen, die Amid- und Ester-Strukturen in getrennten Verbindungen enthalten (Beispiel 3). Um die gewünschten Eigenschaften zu erhalten, müssen Amid- und Ester-Struktur erfindungsgemäß in einer Wachsverbindung vorliegen. Diese kann allerdings auch in Kombination mit anderen Wachsen eingesetzt werden.

## Patentansprüche

1. Thermoplastisch verarbeitbares Polyurethan, hergestellt durch Umsetzung der polyurethanbildenden Komponenten
A) organisches Diisocyanat,
B) lineares hydroxylterminiertes Polyol mit einem Molekulargewicht von 500 bis 5000,
C) Diol- oder Diamin-Kettenverlängerer mit einem Molekulargewicht von 60 bis 500,
wobei das Molverhältnis der NCO-Gruppen in A) zu den gegenüber Isocyanat reaktiven Gruppen in B) u. C) 0,9 bis 1,2 beträgt,
**dadurch gekennzeichnet, daß** das Polyurethan 0,05 bis 2 Gew.-%, bezogen auf das Gesamtprodukt, eines durch Acylierung der Hydroxy- und Aminogruppen von Aminoalkoholen mit Ölsäure, Palmitinsäure, Stearylsäure, Erucasäure oder deren Derivaten erhältlichen Wachses enthält.

2. Film/Folie aus einem thermoplastisch verarbeitbaren Polyurethan gemäß Anspruch 1.

3. Faser aus einem thermoplastisch verarbeitbaren Polyurethan gemäß Anspruch 1.

4. Spritzgießteil aus einem thermoplastisch verarbeitbaren Polyurethan gemäß Anspruch 1.

5. Verfahren zur kontinuierlichen Herstellung eines thermoplastisch verarbeitbaren Polyurethans gemäß Anspruch 1, **dadurch gekennzeichnet, daß** das durch Acylierung der Hydroxy- und Aminogruppen von Aminoalkoholen erhältliche Wachs zusammen mit den Reaktionskomponenten A), B) und C) und gegebenenfalls weiteren Hilfsstoffen in einen Extruder dosiert wird.

6. Verfahren zur kontinuierlichen Herstellung eines thermoplastisch verarbeitbaren Polyurethans gemäß Anspruch 1, **dadurch gekennzeichnet, daß** das durch Acylierung der Hydroxy- und Aminogruppen von Aminoalkoholen erhältliche Wachs in das Polyol B) eingemischt und zusammen mit den Reaktionskomponenten A), B) und C) und gegebenenfalls weiteren Hilfsstoffen in einen Extruder dosiert wird.

7. Verwendung von durch Acylierung der Hydroxy- und Aminogruppen von Aminoalkoholen mit Ölsäure, Palmitinsäure, Stearylsäure, Erucasäure oder deren Derivaten erhältlichen Wachsen als Additiv in thermoplastisch verarbeitbaren Polyurethanen.

## Claims

1. A melt processable polyurethane produced by reacting the polyurethane-forming components
A) organic diisocyanate,
B) linear hydroxyl-terminated polyol having a molecular weight of 500 to 5000,
C) diol or diamine chain extenders having a molecular weight of 60 to 500,
wherein the molar ratio of NCO groups in A) to the isocyanate-reactive groups in B) and C) is 0.9 to 1.2, **characterised in that** the polyurethane contains 0.05 to 2 wt.%, relative to the total product, of a wax obtainable by acylating the hydroxy and amino groups of amino alcohols with oleic acid, palmitic acid, stearyl acid, erucic acid or the derivatives thereof.

2. A sheet/film produced from a melt processable polyurethane according to claim 1.

3. A fibre produced from a melt processable polyurethane according to claim 1.

4. An injection moulded article produced from a melt processable polyurethane according to claim 1.

5. A process for the continuous production of a melt processable polyurethane according to claim 1, **characterised in that** the wax obtainable by acylating the hydroxy and amino groups of amino alcohols is apportioned into an extruder together with reaction components A), B) and C) and optionally further auxiliary substances.

6. A process for the continuous production of a melt processable polyurethane according to claim 1, **characterised in that** the wax obtainable by acylating the hydroxy and amino groups of amino alcohols is incorporated into the polyol B) and apportioned into an extruder together with reaction components A), B) and C) and optionally further auxiliary substances.

7. Use of the waxes obtainable by acylating the hydroxy and amino groups of amino alcohols with oleic acid, palmitic acid, stearyl acid, erucic acid or the derivatives thereof as an additive in melt processable polyurethanes.

## Revendications

1. Polyuréthane thermoplastique, fabriqué par réaction des composants formant le polyuréthanne
A) di-isocyanate organique
B) polyalcool linéaire à terminaison hydroxyle avec un poids moléculaire de 500 à 5000,
C) allongeur de chaîne à diol ou diamine avec un poids moléculaire de 60 à 500,
dans lequel le rapport molaire des groupes NCO dans A) aux groupes réactifs vis-à-vis de l'isocyanate dans B) et C) est de 0,9 à 1,2,
**caractérisé en ce que** le polyuréthane contient 0,05 à 2 % en poids, rapporté au produit total, d'une cire obtenue par acylation des groupes hydroxyle et amino d'aminoalcools par l'acide oléique, l'acide palmitique, l'acide stéarique, l'acide érucique ou leurs dérivés.

2. Film ou feuille d'un polyuréthane thermoplastique selon la revendication 1.

3. Fibre d'un polyuréthane thermoplastique selon la revendication 1.

4. Pièce moulée par injection d'un polyuréthane thermoplastique selon la revendication 1.

5. Procédé de fabrication continue d'un polyuréthane thermoplastique selon la revendication 1, **caractérisé en ce que** la cire obtenue par acylation des groupes hydroxyle et amino d'aminoalcools, est dosée dans une presse à extruder en présence des composants réactionnels A), B) et C) et d'autres matières auxiliaires, le cas échéant.

6. Procédé de fabrication continue d'un polyuréthane thermoplastique selon la revendication 1, **caractérisé en ce que** la cire obtenue par acylation des groupes hydroxyle et amino d'aminoalcools, est mélangée au polyalcool B) et dosée dans une presse à extruder, en présence des composants réactionnels A), B) et C) et d'autres matières auxiliaires, le cas échéant.

7. Utilisation de cires obtenables par acylation des groupes hydroxyle et amino d'aminoalcools par l'acide oléique, l'acide palmitique, l'acide stéarique, l'acide érucique ou leurs dérivés, comme additif dans des polyuréthannes thermoplastiques.
